# EUROPEAN PATENT APPLICATION

(11) **EP 4 738 147 A1**
(43) Date of publication of application: **06.05.2026**
(21) Application number: 24861696.3
(22) Date of filing: 18.07.2024
(51) Int. Cl.: G06F 16/955, G06F 16/958

(54) **INTERNAL LINK GENERATION METHOD, DATA PROCESSING METHOD, SEARCH METHOD AND COMPUTING DEVICE**

(30) Priority: 04.09.2023 CN 202311137718
(71) Applicant: Hangzhou Alibaba International Internet Industry Co., Ltd., Hangzhou, Zhejiang 310052 (CN)
(72) Inventor: LU, Zhihong, Hangzhou, Zhejiang 311121 (CN)
(74) Representative: Wu, Ting
(86) International application number: PCT/CN2024/106269
(87) International publication number: WO 2025/050851

(57) **Abstract**

Embodiments of the present application provide an internal link generating method, a data processing method, a search method, and a computing device. Here, multiple sets of matching pairs are determined; the matching pair is composed of an object and key information having a matching relationship with the object; the matching pair is identified and obtained from a key information database and an object database; at least one page link relationship corresponding to a list page and a detail page is determined; and association conversion is performed on the multiple sets of matching pairs according to the at least one page link relationship, to obtain two pages respectively corresponding to the at least one page link relationship and key information used as an internal link between the two pages. The technical solutions provided by the embodiments of the present application generate internal links by combining the matching relationship between objects and key information, which ensures the relevance between pages corresponding to different page link relationships, helps to improve website weight and website indexing rate, thereby ensuring the rationality of the generated internal links.

## Description

### CROSS -REFERENCE TO RELATED APPLICATION

This application claims priority to Chinese Patent Application No. 202311137718.0, filed with the China National Intellectual Property Administration on September 4, 2023, and entitled "Internal Link Generation Method, Data Processing Method, Search Method, and Computing Device", the entire contents of which are incorporated herein by reference.

### TECHNICAL FIELD

Embodiments of the present application relate to the technical field of network, and in particular, to an internal link generation method, data processing method, search method, and computing device.

### BACKGROUND

An internal link refers to an internal link of a website, that is, a mutual link between internal pages under the same website domain name. Internal links are usually placed in internal pages of a website in the form of key information, and a user can click the key information in a page to enter another internal page of the website pointed to by the key information, or a search engine can crawl the internal page of the website pointed to by the internal link.

In search engine optimization (Search Engine Optimization, SEO), a reasonable internal link structure enables a search engine to perform fast crawling and indexing, improves website weight, and increases user click-through rate.

Therefore, how to reasonably determine internal links has become a technical problem to be solved by those skilled in the art, especially in websites that provide objects such as commodities and allow users to perform purchasing, browsing, or other interaction behaviors with the objects, where page types are mainly divided into list pages and detail pages of objects, and involved page link relationships usually include a list page linking to a detail page, a list page linking to a list page, a detail page linking to a detail page, and a detail page linking to an object page, etc., while a reasonable internal link structure can recommend valuable list pages or detail pages to a search engine, improve page ranking, and thereby introduce more traffic to the website, so the above technical problem needs to be solved urgently.

### SUMMARY

Embodiments of the present application provide an internal link generation method, data processing method, search method, and computing device, for solving the technical problem of unreasonable internal links in the prior art.

In a first aspect, an embodiment of the present application provides an internal link generation method, comprising:
determining multiple sets of matching pairs; wherein the matching pair is composed of an object and key information having a matching relationship with the object; and the matching pair is identified and obtained from a key information database and an object database;
determining at least one page link relationship corresponding to a list page and a detail page;
performing association conversion on the multiple sets of matching pairs according to the at least one page link relationship, to obtain two pages respectively corresponding to the at least one page link relationship and key information used as an internal link between the two pages.

Optionally, the method further comprises:
clustering multiple pieces of key information in the key information database according to key information features, to obtain multiple information groups;
matching objects in the object database respectively with the multiple information groups according to object features, to determine at least one matched target information group;
matching the object respectively with key information in the at least one target information group, to determine at least one piece of key information matching the object, and constituting at least one matching pair by the object and the at least one piece of key information.

Optionally, the method further comprises:
extracting key information features respectively corresponding to multiple pieces of key information in the key information database by using a matching model;
extracting object features respectively corresponding to multiple objects in the object database by using the matching model;
wherein the matching model is obtained by training based on multiple sets of sample matching pairs using a contrastive learning manner; and the sample matching pair comprises sample key information and a sample object.

Optionally, the at least one page link relationship comprises a list page linking to a detail page;
the performing association conversion on the multiple sets of matching pairs according to the at least one page link relationship to obtain two pages respectively corresponding to the at least one page link relationship and key information used as an internal link between the two pages comprises:
determining, from the multiple sets of matching pairs, multiple pieces of key information having a matching relationship with a same object;
determining first key information and second key information according to matching degrees of the multiple pieces of key information with the object respectively;
determining a first list page pointed to by the first key information and a first detail page of the object based on a correspondence relationship between key information and list pages, and using the second key information as an internal link in the first list page.

Optionally, the determining first key information and second key information according to matching degrees of the multiple pieces of key information with the object respectively comprises:
determining first key information whose matching degree satisfies a first matching requirement and determining second key information whose matching degree satisfies a second matching requirement according to the matching degrees of the multiple pieces of key information with the object respectively.

Optionally, the at least one page link relationship comprises a detail page linking a list page;
the performing association conversion on the multiple sets of matching pairs according to the at least one page link relationship to obtain two pages respectively corresponding to the at least one page link relationship and key information used as an internal link between the two pages comprises:
searching for a target matching pair from the multiple sets of matching pairs according to a matching degree between key information and an object;
determining a target list page pointed to by target key information in the target matching pair and a target detail page of a target object based on a correspondence relationship between key information and list pages, and using the target key information as an internal link in the target detail page.

Optionally, the at least one page link relationship comprises a detail page linking a detail page;
the performing association conversion on the multiple sets of matching pairs according to the at least one page link relationship to obtain two pages respectively corresponding to the at least one page link relationship and key information used as an internal link between the two pages comprises:
determining a first object and a second object satisfying a relevance requirement;
searching for first key information matching the first object from the multiple sets of matching pairs;
determining a first detail page of the first object and a second detail page of the second object, and using the first key information as an internal link in the second detail page.

Optionally, the at least one page link relationship comprises a list page linking a list page;
the performing association conversion on the multiple sets of matching pairs according to the at least one page link relationship to obtain two pages respectively corresponding to the at least one page link relationship and key information used as an internal link between the two pages comprises:
searching for first key information and second key information having a matching relationship with a same object from the multiple sets of matching pairs;
determining a first list page pointed to by the first key information and a second list page pointed to by the second key information based on a correspondence relationship between key information and list pages, and using the first key information as an internal link in the second list page.

Optionally, the searching for first key information and second key information having a matching relationship with a same object from the multiple sets of matching pairs comprises:
searching for multiple pieces of key information having a matching relationship with a same object from the multiple sets of matching pairs;
determining first key information whose matching degree satisfies a third matching requirement and determining second key information whose matching degree satisfies a fourth matching requirement according to matching degrees of the multiple pieces of key information with the object respectively.

Optionally, the method further comprises:
performing page configuration according to association conversion results respectively corresponding to the at least one page link relationship, to update an internal link structure of a website;
or, sending association conversion results respectively corresponding to the at least one page link relationship to a target person; where the association conversion result is used to generate page configuration information, and the page configuration information is used to update an internal link structure of the website.

Optionally, the method further comprises:
determining key information in search records and a list page pointed to by the key information according to the search records generated inside a website and/or outside the website;
establishing a correspondence relationship between the key information and the list page, and constructing a key information database according to the key information.

Optionally, the matching model is obtained by pre-training in the following manner:
determining multiple sets of sample matching pairs corresponding to a current training batch;
inputting the multiple sets of sample matching pairs into the matching model;
training the matching model by adopting a contrastive learning manner, using any one sample matching pair as a positive sample, and using sample key information in any one sample matching pair and a sample object in at least one other sample matching pair as negative samples.

Optionally, the training the matching model by adopting a contrastive learning manner, using any one sample matching pair as a positive sample, and using sample key information in any one sample matching pair and a sample object in at least one other sample matching pair as negative samples comprises:
extracting sample key information features corresponding to sample key information and sample object features corresponding to sample objects in the multiple sets of sample matching pairs respectively by using the matching model;
using any one sample matching pair as a positive sample, and using sample key information in any one sample matching pair and a sample object in at least one other sample matching pair as negative samples;
calculating a matching degree corresponding to the positive sample and a matching degree corresponding to the negative sample based on the sample information features and the sample object features;
training the matching model with maximizing the matching degree corresponding to the positive sample and minimizing the matching degree corresponding to the negative sample as a training objective.

Optionally, the method further comprises:
generating group features respectively corresponding to the multiple information groups based on key information features of at least one piece of key information respectively comprised in the multiple information groups;
using the group features of the multiple information groups as respective index identifiers;
the matching any one object in the object database respectively with the multiple information groups according to object features to determine a matched target information group comprises:
   selecting a target index identifier matching any one object according to the object features;
   determining a target information group corresponding to the target index identifier.

Optionally, the determining second key information whose matching degree satisfies a second matching requirement comprises:
selecting key information with a highest matching degree as the second key information in a case where at least two pieces of key information exist in the multiple pieces of key information in addition to the first key information.

The method further comprises:
selecting and retaining at least one target internal link in an order of matching degrees with the object from high to low in a case where it is determined that the first list page corresponds to multiple internal links and the multiple internal links point to a first detail page of a same object.

Optionally, the searching for a target matching pair from the multiple sets of matching pairs according to a matching degree between key information and an object comprises:
determining multiple pieces of key information having a matching relationship with any one object from the multiple sets of matching pairs;
determining that key information corresponding to a highest matching degree and the object constitute the target matching pair according to matching degrees of the multiple pieces of key information with the object respectively.

Optionally, the determining second key information whose matching degree satisfies a fourth matching requirement comprises:
selecting key information with a highest matching degree as the second key information in a case where at least two pieces of key information exist in the multiple pieces of key information in addition to the first key information.

The method further comprises:
selecting and obtaining at least one target internal link in an order of matching degrees with respective corresponding objects from high to low in a case where it is determined that the first list page corresponds to multiple internal links and the multiple internal links point to a same second list page.

Optionally, the determining key information in the search records and a list page pointed to by the key information comprises:
determining key information in the search records and at least one candidate list page pointed to by the key information;
determining a list page corresponding to the key information according to click information of the at least one candidate list page.

Optionally, the identifying an object and key information having a matching relationship from the key information database and the object database to obtain multiple sets of matching pairs comprises:
identifying an object and key information having a matching relationship from the key information database and the object database in response to a page update instruction, to obtain multiple sets of matching pairs.

Optionally, the method further comprises:
counting a click-through rate corresponding to the website, and generating the page update instruction according to the click-through rate satisfying a first update condition;
   or,
counting a crawl rate and/or an indexing rate corresponding to the website, and generating the page update instruction according to the crawl rate and/or the indexing rate satisfying a second update condition.

Optionally, the matching model is specifically used to extract key information features respectively corresponding to multiple pieces of key information in the key information database, and extract respective object features from related information of multiple objects in the object database by using the matching model; and the key information features and the object features are used to determine an object and key information having a matching relationship in the key information database and the object database, to obtain multiple sets of matching pairs.

In a second aspect, an embodiment of the present application provides a data processing method, comprising:
obtaining multiple sets of sample matching pairs;
inputting the multiple sets of sample matching pairs as training data of a current training batch into a matching model;
training the matching model by adopting a contrastive learning manner, using any one sample matching pair as a positive sample, and using sample key information in any one sample matching pair and a sample object in at least one other sample matching pair as negative samples;
wherein the matching model is used to identify an object and key information having a matching relationship in a key information database and an object database, to obtain multiple sets of matching pairs; and the multiple sets of matching pairs are used to perform association conversion to obtain any two pages respectively corresponding to at least one page link relationship and key information used as an internal link between the two pages.

Optionally, the training the matching model by adopting a contrastive learning manner, using any one sample matching pair as a positive sample, and using sample key information in any one sample matching pair and a sample object in at least one other sample matching pair as negative samples comprises:
extracting sample key information features corresponding to sample key information and sample object features corresponding to sample objects in the multiple sets of sample matching pairs respectively by using the matching model;
using any one sample matching pair as a positive sample, and using sample key information in any one sample matching pair and a sample object in at least one other sample matching pair as negative samples;
calculating a matching degree corresponding to the positive sample and a matching degree corresponding to the negative sample based on the sample information features and the sample object features;
training the matching model with maximizing the matching degree corresponding to the positive sample and minimizing the matching degree corresponding to the negative sample as a training objective.

In a third aspect, an embodiment of the present application provides a search method, comprising:
obtaining search information;
crawling a first page matching the search information and a second page pointed to by an internal link in the first page based on the search information; where the first page and the second page are list pages or detail pages; where the internal link is determined by performing association conversion on multiple sets of matching pairs according to at least one page link relationship; and the matching pair is composed of an object and key information having a matching relationship with the object;
indexing the first page and the second page into search results;
determining a display result from the search results.

In a fourth aspect, an embodiment of the present application provides a computing device, comprising a processing component and a storage component;
the storage component stores one or more computer instructions; and the one or more computer instructions are used to be called and executed by the processing component to implement the internal link generation method described in the first aspect, or the data processing method described in the second aspect, or the search method described in the third aspect.

In a fifth aspect, an embodiment of the present application provides a computer-readable storage medium, storing a computer program, where when the computer program is executed by a computer, the internal link generation method described in the first aspect, or the data processing method described in the second aspect, or the search method described in the third aspect is implemented.

In the embodiments of the present application, by using multiple sets of matching pairs composed of objects and key information having a matching relationship, and performing association conversion on the multiple sets of matching pairs according to at least one page link relationship corresponding to a list page and a detail page, any two pages conforming to any page link relationship and key information used as an internal link between the two pages can be obtained; and by generating an internal link based on a matching relationship between an object and key information, relevance between pages corresponding to different page link relationships is ensured, which helps to improve website weight and improve website indexing rate; therefore, the embodiments of the present application improve rationality of the generated internal link and ensure rationality of internal link placement.

These aspects or other aspects of the present application will be more concise and easy to understand in the description of the following embodiments.

### BRIEF DESCRIPTION OF THE DRAWINGS

To describe the technical solutions in the embodiments of the present application or in the prior art more clearly, the following briefly introduces the accompanying drawings required for describing the embodiments or the prior art. Apparently, the accompanying drawings in the following description show some embodiments of the present application, and a person of ordinary skill in the art may still derive other drawings from these accompanying drawings without creative efforts.
FIG. 1 shows a flowchart of an embodiment of an internal link generation method provided by the present application;
FIG. 2a shows a schematic diagram of a page link relationship conversion in a practical application of an embodiment of the present application;
FIG. 2b shows a schematic diagram of another page link relationship conversion in a practical application of an embodiment of the present application;
FIG. 2c shows a schematic diagram of yet another page link relationship conversion in a practical application of an embodiment of the present application;
FIG. 2d shows a schematic diagram of yet another page link relationship conversion in a practical application of an embodiment of the present application;
FIG. 3 shows a flowchart of an embodiment of a data processing method provided by the present application;
FIG. 4 shows a schematic diagram of scenario interaction of an embodiment of the present application in an actual application;
FIG. 5a to FIG. 5b respectively show schematic diagrams of interface display of an embodiment of the present application in an actual application;
FIG. 6 shows a flowchart of an embodiment of a search method provided by an embodiment of the present application;
FIG. 7 shows a structural schematic diagram of an embodiment of an internal link generation apparatus provided by the present application;
FIG. 8 shows a structural schematic diagram of an embodiment of a data processing apparatus provided by the present application;
FIG. 9 shows a structural schematic diagram of an embodiment of a search apparatus provided by the present application;
FIG. 10 shows a schematic structural diagram of an embodiment of a computing device provided by the present application.

### DETAILED DESCRIPTION OF THE EMBODIMENTS

To enable those skilled in the art to better understand the solutions of the present application, the technical solutions in the embodiments of the present application will be clearly and completely described below with reference to the accompanying drawings in the embodiments of the present application.

In some flows described in the specification, claims, and the above accompanying drawings of the present application, multiple operations appearing in a specific order are included, but it should be clearly understood that these operations may not be performed in the order appearing herein or may be performed in parallel, and serial numbers of operations such as 101 and 102 are merely used to distinguish different operations, and the serial numbers themselves do not represent any execution order. In addition, these flows may include more or fewer operations, and these operations may be performed sequentially or in parallel. It should be noted that descriptions such as "first" and "second" herein are used to distinguish different messages, devices, modules, etc., and do not represent a sequential order, nor do they limit "first" and "second" to different types.

The technical solutions of the embodiments of the present application can be applied to an internal link construction scenario of a website, especially a website that provides objects such as commodities and allows a user to perform purchasing, browsing, or other interaction behaviors with the objects.

A website usually includes two page types requiring internal link construction: a list page and a detail page The list page may refer to a content aggregation page containing multiple list elements, and an internal link placed in the list page may serve as a hyperlink other than the list elements in the list page. The detail page is used to describe object information, and an internal link placed in the detail page may serve as a hyperlink other than the object information.

Since a reasonable internal link structure can recommend valuable list pages or detail pages to a search engine, improve page ranking, and thereby introduce more traffic to the website, how to generate reasonable internal links to perform internal link placement accordingly has become a technical problem to be solved at present.

The inventors found in the process of implementing the present application that current page link relationships mainly include a list page linking to a detail page, a list page linking to a list page, a detail page linking to a detail page, and a detail page linking to an object page, etc., and pages need relevant key information as internal links for hyperlink connection; for example, for a list page linking to a detail page, the list page needs to carry key information pointing to the detail page. If internal link determination is performed separately for different page link relationships, for example, for a list page linking to a detail page, a matching degree between the list page and key information and a matching degree between the key information and the detail page need to be determined respectively; in a scenario where a model is used for matching, multiple models need to be trained for four page link relationships, resulting in low internal link generation efficiency and high cost.

In order to improve rationality of internal links and ensure efficiency of internal link generation, the inventors proposed the technical solutions of the embodiments of the present application after a series of researches; in the embodiments of the present application, it is only needed to determine an object and key information having a matching relationship, so that under a correspondence relationship between key information and a list page, association conversion can be performed on a matching pair of the object and the key information, to obtain two pages corresponding to different page link relationships and key information used as an internal link between the two pages. By generating an internal link according to a matching relationship between an object and key information, relevance between pages corresponding to different page link relationships is ensured, which helps to improve website weight and improve website indexing rate; therefore, the embodiments of the present application improve rationality of the generated internal link, ensure rationality of internal link placement, and only need to identify the matching relationship between the object and the key information, thereby ensuring internal link generation efficiency and reducing internal link generation cost.

It should be noted that the embodiments of the present application may involve the use of user data; in actual application, user-specific personal data may be used in the solutions described herein within a scope permitted by applicable laws and regulations in compliance with requirements of applicable laws and regulations of a country where the user is located (for example, explicit consent of the user, effective notification to the user, etc.).

The technical solutions in the embodiments of the present application will be clearly and completely described below with reference to the accompanying drawings in the embodiments of the present application. Apparently, the described embodiments are merely some rather than all of the embodiments of the present application. All other embodiments obtained by a person skilled in the art based on the embodiments of the present application without creative efforts shall fall within the protection scope of the present application.

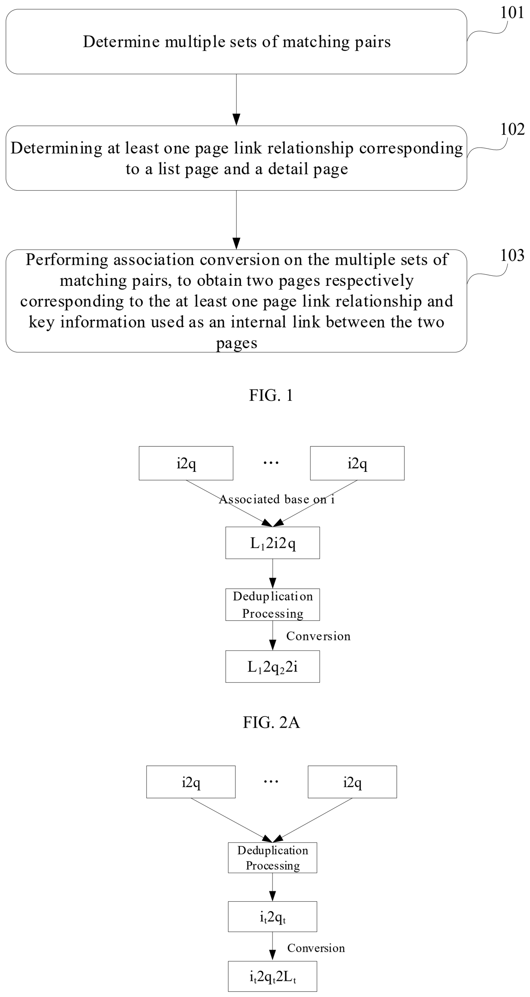

FIG. 1 is a flowchart of an embodiment of an internal link generation method provided by an embodiment of the present application, where the technical solution of this embodiment can be executed by a server end, and the server end can include a server providing various services.

It should be noted that the server end 102 can be implemented as a distributed server cluster composed of multiple servers, or can be implemented as a single server. The server can also be a server of a distributed system, or a server combined with a blockchain. The server can also be a cloud server providing basic cloud computing services such as cloud services, cloud databases, cloud computing, cloud functions, cloud storage, network services, cloud communication, middleware services, domain name services, security services, Content Delivery Networks (CDNs), and big data and artificial intelligence platforms, or an intelligent cloud computing server or intelligent cloud host with artificial intelligence technology.

The internal link generation method of the embodiment shown in FIG. 1 can include the following steps:
101: Determine multiple sets of matching objects.

In particular, each matching pair is composed of an object and key information having a matching relationship with the object.

In particular, the multiple sets of matching pairs are identified and obtained from a key information database and an object database.

In particular, the key information database stores a large amount of key information, and in practical applications, the key information used as internal links can specifically refer to keywords; of course, the present application does not exclude that the key information can also be in other data forms, such as images, videos, etc.

Key information in the key information database may originate from search records generated inside the website and/or search records generated outside the website, where the search records generated outside the website may include search records generated by a search engine or search records generated by an external website having an association relationship with the website. The embodiments of the present application use not only on-site data but also off-site data, which improves coverage of key information and makes the key information database more comprehensive.

The object database stores related information of objects provided by the website, such as object images, object titles, object categories, and/or object click information such as CPV (Cost Per Click), which is not limited in the present application. In actual application, the object involved in the embodiments of the present application may refer to a commodity.

Key information in the key information may have a one-to-one correspondence relationship with a list page, and each piece of key information may be used to point to one list page corresponding thereto.

The search records generated inside the website and/or outside the website may include key information and search results corresponding to the key information, and the search results may include list pages provided by website content. Therefore, optionally, key information in the search records and a list page pointed to by the key information are determined according to the search records generated inside the website and/or outside the website; a correspondence relationship between the key information and the list page is established, and a key information database is constructed according to the key information.

Since search results of same key information may include multiple list pages, optionally, the determining key information in the search records and a list page pointed to by the key information comprises: determining key information in the search records and at least one candidate list page pointed to by the key information; and determining a list page corresponding to the key information according to click information of the at least one candidate list page.

That is, the at least one candidate list page may be sorted according to the click information, such as the number of clicks, and a candidate list page whose click information meets a screening condition is selected as the list page having a correspondence relationship with the key information, to be saved in the key information database. The screening condition may refer to, for example, a largest number of clicks.

In the embodiments of the present application, key information matched by each object can be identified from the key information database and the object database, so that a set of matching pair can be composed of one object and one piece of key information having a matching relationship, and thus multiple sets of matching pairs can be obtained. Assuming that q (query) represents key information and i (item) represents an object, each set of matching objects can be represented as i2q (i to q). It should be noted that "2" in i2q involved herein, and L2i, i2L, i2i, and L2L that may be involved later is used to represent "to", therefore, L2i is L to i; i2L is i to L; i2i is i to i; and L2L is L to L.

The object and key information having a matching relationship may be determined according to feature similarity between object features and key information features; the feature similarity represents a matching degree between the object and the key information; for example, in a case where the object features and the key information features are represented in a vector form, the matching degree may be determined according to a vector distance, and usually, the smaller the vector distance, the greater the matching degree.

Certainly, a model may also be used to identify an object and key information having a matching relationship.

The matching pairs may be pre-generated and saved in a storage system, so that multiple sets of matching objects can be determined from the storage system may be a database or other network storage systems. A specific obtaining manner of the matching pairs may be described in detail in the following embodiments, and details are not described herein again.

102: determining at least one page link relationship corresponding to a list page and a detail page.

In actual application, the at least one page link relationship may comprise: a list page linking to a detail page, a list page linking to a list page, a detail page linking to a detail page, and a detail page linking to a list page.

Two pages involved in each page link relationship need to be connected through key information as an internal link. For example, for a list page linking to a detail page, an internal link placed in the list page and used to point to the detail page needs to be determined; for a list page linking to a list page, an internal link placed in one list page and used to point to another list page needs to be determined; for a detail page linking to a detail page, an internal link placed in one detail page and used to point to another detail page needs to be determined; and for a detail page linking to a list page, an internal link placed in the detail page and used to point to the list page needs to be determined.

103: performing association conversion on the multiple sets of matching pairs according to the at least one page link relationship, to obtain two pages respectively corresponding to the at least one page link relationship and key information used as an internal link between the two pages.

In the embodiments of the present application, multiple sets of matching pairs may be associated through an object i, and there may be multiple pieces of key information q having a matching relationship with a same object i, while each object i may correspond to a detail page; according to a correspondence relationship between key information and a list page, a list page pointed to by each piece of key information can be determined; therefore, by performing association conversion on the multiple sets of matching pairs, two pages respectively corresponding to the at least one page link relationship and key information used as an internal link between the two pages can be obtained.

Based on matching pairs composed of objects and key information having a matching relationship, the embodiments of the present application can determine any two pages respectively corresponding to the at least one page link relationship and key information used as an internal link between the two pages by performing association conversion on multiple sets of matching pairs; the matching relationship between the object and the key information ensures relevance between pages corresponding to different page link relationships, thereby helping to improve website weight and improve website indexing rate; therefore, rationality of the generated internal link is improved, and the internal link can be generated only by determining the object and the key information having a matching relationship, which improves internal link generation efficiency.

For ease of understanding, association conversion processes for different page link relationships are respectively introduced below.

In an optional manner, the at least one page link relationship may comprise a list page linking to a detail page; assuming that L represents a list page, and each object i corresponds to a detail page, the list page linking to the detail page may be represented as: L2i; since an internal link q carried in the list page and linking to the detail page needs to be determined, a conversion result actually corresponding to L2i is: L2q2i

The performing association conversion on the multiple sets of matching pairs according to the at least one page link relationship to obtain two pages respectively corresponding to the at least one page link relationship and key information used as an internal link between the two pages may comprise:
determining multiple pieces of key information having a matching relationship with a same object from the multiple sets of matching pairs; determining first key information and second key information according to matching degrees of the multiple pieces of key information with the object respectively; and determining a first list page pointed to by the first key information and a first detail page corresponding to the object according to a correspondence relationship between key information and list pages, and using the second key information as an internal link in the first list page.

In the embodiments of the present application, for a set of object and key information having a matching relationship, a matching degree between the object and the key information can be determined.

Since the key information in the present application corresponds to a list page, and the matching degree between the object and the key information can be determined, for multiple sets of matching pairs having same object characteristics, first key information used to point to a list page and second key information used to point to a detail page in the multiple sets of matching pairs need to be determined based on the matching degree.

For example, in the schematic diagram of association conversion shown in FIG. 2a, for multiple sets of matching pairs i2q having the same object characteristic, based on matching degrees between different key information and object i, assuming that first key information q₁ matching the same object i can be determined, a list page corresponding to the first key information q₁ is L₁, the multiple sets of matching pairs can be associated through the object i to first obtain: L₁2i2q, and second key information q₂ can be determined through operations such as deduplication processing, so it can be further converted to obtain: L₁2q₂2i.

In some embodiments, the determining first key information and second key information according to matching degrees of the multiple pieces of key information with the object respectively comprises:
determining first key information whose matching degree satisfies a first matching requirement and determining second key information whose matching degree satisfies a second matching requirement according to the matching degrees of the multiple pieces of key information with the object respectively.

The first matching requirement may refer to, for example, a highest matching degree.

Optionally, if one piece of key information exists in the multiple pieces of key information in addition to the first key information, the key information may serve as the second key information; in addition, there may be two or more pieces of key information, and deduplication processing may be performed; therefore, the determining second key information whose matching degree satisfies a second matching requirement may comprise:
selecting key information with a highest matching degree as the second key information in a case where at least two pieces of key information exist in the multiple pieces of key information in addition to the first key information.

In addition, according to the above internal link generation logic, the first list page may be determined to correspond to multiple internal links; if the multiple internal links are the same but point to a same object, deduplication processing also needs to be performed at this time; therefore, in some embodiments, the method may further comprise:
selecting and retaining at least one target internal link in an order of matching degrees with the object from high to low in a case where it is determined that the first list page corresponds to multiple internal links and the multiple internal links point to a first detail page of a same object. The at least one target internal link is used as a final association conversion result to update an internal link structure, so that only the at least one target internal link among the multiple internal links can be placed in the first list page.

As another optional manner, the at least one page link relationship comprises a detail page linking to a list page; assuming that L represents a list page, and each object i may correspond to a detail page, the detail page linking to the list page may be represented as: i2L; since an internal link q carried in the detail page and linking to the list page needs to be determined, an association conversion result actually corresponding to i2L is: i2q2L.

Since the object and key information having a matching relationship have been determined, the performing association conversion on the multiple sets of matching pairs according to the at least one page link relationship to obtain key information used as an internal link between pages respectively corresponding to the at least one page link relationship may comprise:
searching for a target matching pair from the multiple sets of matching pairs according to a matching degree between key information and an object;
determining a target list page pointed to by target key information in the target matching pair and a target detail page corresponding to a target object, and using the target key information as an internal link in the target detail page.

The target matching pair may refer to, for example, a matching degree being greater than a specified threshold.

As another optional manner, the searching for a target matching pair from the multiple sets of matching pairs according to a matching degree between key information and an object may be: determining multiple pieces of key information having a matching relationship with any one object from the multiple sets of matching pairs; and determining that key information corresponding to a highest matching degree and the object constitute the target matching pair according to matching degrees of the multiple pieces of key information with the object respectively.

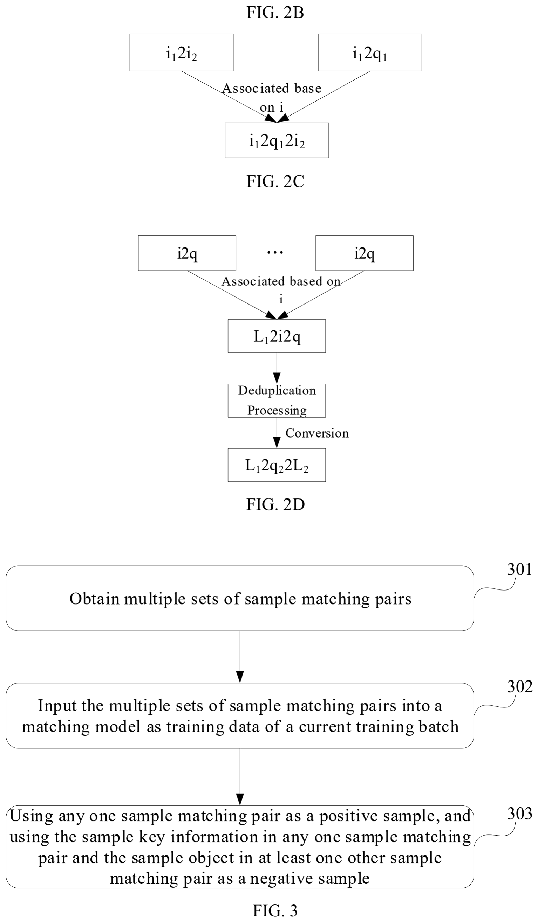

In the schematic diagram of key conversion described in FIG. 2b, for multiple sets of matching pairs i2q, deduplication processing can be performed according to matching degrees between key information and objects to obtain a target matching pair it2qt; since there is a correspondence between key information and list pages, a target list page Lt pointed to by target key information qt can be determined based thereon, and the target key information qt can serve as an internal link in a target detail page pointed to by object it, so a corresponding association conversion result is it2qt2Lt.

As yet another optional manner, the at least one page link relationship includes a detail page linking to a detail page; assuming L is used to represent a list page, and each object i can correspond to a detail page, the detail page linking to the detail page can be represented as: i2i; since it is necessary to determine an internal link q carried in the detail page and linking to the detail page, a conversion result actually corresponding to i2i is: i2q2i.

The above associating and converting the multiple sets of matching pairs according to the at least one page link relationship to obtain key information used as internal links between pages respectively corresponding to the at least one page link relationship can include:
determining a first object and a second object satisfying a relevance requirement;
finding first key information having a matching relationship with the first object from the multiple sets of matching pairs;
determining a first detail page corresponding to the first object and a second detail page corresponding to the second object, and using the first key information as an internal link in the second detail page.

In particular, the relevance requirement can include, for example, same category and/or feature matching.

In particular, the first object can be any one of two objects satisfying the relevance requirement in real time.

In particular, if there are multiple pieces of key information having a matching relationship with the first object, key information with a highest matching degree with the first object can be selected as the first key information.

To facilitate understanding, in the schematic diagram of association conversion shown in FIG. 2c, a first object and a second object satisfying the relevance requirement are first determined: i₁2i₂; assuming the first object i₁ matches first key information q₁, that is, i₁2q₁, in a case where the first object i₁ and the second object i₂ satisfy the relevance requirement, an association conversion result can be obtained by associating through the object i₁: i₁2q₁2i₂.

As yet another optional manner, the at least one page link relationship includes a list page linking to a list page; assuming L is used to represent a list page, and each object i can correspond to a detail page, the list page linking to the list page can be represented as: L2L; since it is necessary to determine an internal link q carried in the list page and linking to the list page, a conversion result actually corresponding to L2L is: L2q2L.

The above associating and converting the multiple sets of matching pairs according to the at least one page link relationship to obtain pages respectively corresponding to the at least one page link relationship and key information used as internal links can include:
finding first key information and second key information having a matching relationship with a same object from the multiple sets of matching pairs; determining that the first key information points to a first list page and the second key information points to a second list page according to a correspondence between key information and list pages, and using the first key information as an internal link in the second list page.

Two pieces of key information having an association can be determined using the same object, and a link relationship can be established between two list pages corresponding to the two pieces of key information.

In particular, among multiple pieces of key information matching the same object, one piece of key information can be arbitrarily selected as the first key information, and any other piece of key information can be selected as the second key information.

In addition, as other optional manners, the above finding first key information and second key information having a matching relationship with a same object from the multiple sets of matching pairs can include:
finding multiple pieces of key information having a matching relationship with a same object from the multiple sets of matching pairs; determining first key information whose matching degree satisfies a third matching requirement and determining second key information whose matching degree satisfies a fourth matching requirement according to matching degrees of the multiple pieces of key information with the object respectively.

The third matching requirement can refer to, for example, a maximum matching degree. In a case where the matching degree is represented by a vector distance, it can refer to a minimum vector distance.

In some embodiments, the determining second key information whose matching degree satisfies a fourth matching requirement may comprise: selecting key information with a highest matching degree as the second key information in a case where at least two pieces of key information exist in the multiple pieces of key information in addition to the first key information.

Through deduplication processing, the first key information and the second key information can be determined.

In addition, in some embodiments, the method may further comprise: selecting and retaining at least one target internal link in an order of matching degrees with respective corresponding objects from high to low in a case where it is determined that the first list page corresponds to multiple internal links and the multiple internal links point to a same second list page.

The at least one target internal link is used as a final association conversion result to update an internal link structure, so that only the at least one target internal link among the multiple internal links can be placed in the first list page.

For example, in the schematic diagram of association conversion shown in FIG. 2d, for multiple sets of matching pairs i2q having the same object characteristic, by associating through the object i, first key information q₁ and second key information q₂ having a matching relationship with the same object i can be determined; assuming a first list page corresponding to the first key information q₁ is L₁, the multiple sets of matching pairs can be associated through the object i to first obtain: L₁2i2q₂; second key information q₂ can be determined through operations such as deduplication processing, and a second list page corresponding to the second key information q₂ is L₂, then an association conversion result of two sets of matching pairs matching the same object can be obtained: L₁2q₂2L₂.

In some embodiments, an object and key information having a matching relationship may be identified according to key information features and object features, to obtain multiple sets of matching pairs. Multiple pieces of key information having a matching relationship with an object may be found from an object perspective, so that matching pairs are composed of the object and the multiple pieces of key information respectively; or multiple objects having a matching relationship with key information may be found from a key information perspective, so that matching pairs are composed of the key information and the multiple objects respectively.

Since there are numerous data in the key information database and the object database, often in the order of hundreds of millions, in order to improve matching efficiency, as an optional manner, the determining an object and key information having a matching relationship from the key information database and the object database according to object features and key information features to obtain multiple sets of matching pairs may comprise:
clustering multiple pieces of key information in the key information database according to key information features, to obtain multiple information groups;
matching any one object in the object database respectively with the multiple information groups according to object features, to determine at least one matched target information group;
matching the object respectively with key information in the at least one target information group, to determine at least one piece of key information matching the object, and constituting at least one matching pair by the object and the at least one piece of key information.

That is, the key information database is first grouped by clustering to obtain multiple information groups, and then each object can be matched with the information groups to first determine at least one matched target information group, and then the object is matched with each piece of key information contained in the at least one target information group respectively, thereby reducing the number of matching times and reducing calculation amount. Optionally, a GPU (graphics processing unit) may be called to cluster multiple pieces of key information in the key information database to obtain multiple information groups, thereby further accelerating matching operations and improving matching efficiency.

The matching between the object and the information group may be performed based on object features and group features of the information group, where the group features may be calculated and obtained according to respective key information features included in the information group, for example, may be an average value or a sum value of respective key information features, which is not limited in the present application.

In some embodiments, the method may further comprise: generating group features respectively corresponding to the multiple information groups based on key features of at least one piece of key information respectively comprised in the multiple information groups; and using the group features of the multiple information groups as respective index identifiers.

For example, an average value or a sum value of key information features of at least one piece of key information included in each information group may be used as the group feature.

The group feature of each information group may serve as an index identifier of each information group, so that the matching any one object in the object database respectively with the multiple information groups according to object features to determine a matched target information group may comprise: selecting a target index identifier matching any one object according to the object features; and determining a target information group corresponding to the target index identifier.

The target index identifier may be selected according to a matching degree between the object features and different index identifiers.

The object features or key information features may be represented in a vector form, and the matching degree between the object and the key information is characterized by a vector distance such as Euclidean distance, Manhattan distance, etc.

In addition, as another optional manner, the identifying an object and key information having a matching relationship according to key information features and object features to obtain multiple sets of matching pairs may comprise:
clustering multiple objects in the object database according to object features, to obtain multiple object groups;
matching key information in the key information database respectively with the multiple object groups according to key information features, to determine at least one matched target object group;
matching the key information respectively with objects in the at least one target object group, to determine at least one object matching the key information, and constituting at least one matching pair by the key information and the at least one object.

That is, the object database is first grouped by clustering to obtain multiple object groups, and then each piece of key information can be matched with the object groups to first determine at least one matched target object group, and then the key information is matched with each object contained in the at least one target object group respectively, thereby reducing the number of matching times and reducing calculation amount. Optionally, a GPU (graphics processing unit) may be called to cluster multiple objects in the object database to obtain multiple object groups, thereby further accelerating matching operations and improving matching efficiency.

The matching between the key information and the object may be performed based on object features and group features of the object group, where the group features may be calculated and obtained according to respective object features included in the object group, for example, may be an average value or a sum value of respective object features, which is not limited in the present application.

In some embodiments, the method may further comprise: generating group features respectively corresponding to the multiple object groups based on object features of at least one object respectively comprised in the multiple object groups; and using the group features of the multiple object groups as respective index identifiers.

For example, an average value or a sum value of object features of at least one object included in each object group may be used as the group feature.

The group feature of each object group may serve as an index identifier of each object group, so that the matching any one piece of key information in the key information database respectively with the multiple object groups according to key information features to determine a matched target object group may comprise: selecting a target index identifier matching the key information according to the key information features; and determining a target object group corresponding to the target index identifier.

The target index identifier may be selected according to a matching degree between the key information features and different index identifiers.

The object features or key information features may be represented in a vector form, and the matching degree between the object and the key information is characterized by a vector distance such as Euclidean distance, Manhattan distance, etc.

The object features or key information features may be extracted and obtained by using, for example, a bag-of-words model or N-gram (N-gram, a Chinese language model); in order to improve feature accuracy and matching efficiency, in some embodiments, the method may further comprise: extracting key information features respectively corresponding to multiple pieces of key information in the key information database by using a matching model; and extracting respective object features from related information of multiple objects in the object database by using the matching model;
where the matching model is obtained by training based on multiple sets of sample matching pairs using a contrastive learning manner; and the sample matching pair comprises sample key information and a sample object.

For example, the matching model may be implemented by simcse (Simple Contrastive Learning of Sentence Embeddings), which is not limited in the present application.

In some embodiments, the matching model may be specifically obtained by training in the following manner:
determining multiple sets of sample matching pairs corresponding to a current training batch;
inputting the multiple sets of sample matching pairs into the matching model;
training the matching model by adopting a contrastive learning manner, using any one sample matching pair as a positive sample, and using sample key information in any one sample matching pair and a sample object in at least one other sample matching pair as negative samples.

In some embodiments, the training the matching model by adopting a contrastive learning manner, using any one sample matching pair as a positive sample, and using sample key information in any one sample matching pair and a sample object in at least one other sample matching pair as negative samples may comprise:
extracting sample key information features corresponding to sample key information and sample object features corresponding to sample objects in the multiple sets of sample matching pairs respectively by using the matching model;
using any one sample matching pair as a positive sample, and using sample key information in any one sample matching pair and a sample object in at least one other sample matching pair as negative samples;
calculating a matching degree corresponding to the positive sample and a matching degree corresponding to the negative sample based on the sample information features and the sample object features;
training the matching model by maximizing the matching degree corresponding to the positive sample and minimizing the matching degree corresponding to the negative sample.

The matching model may be obtained by training using a self-supervised learning manner, so that the matching model can extract key information features and object features respectively.

In addition, in some embodiments, the identifying an object and key information having a matching relationship from the key information database and the object database to obtain multiple sets of matching pairs may be identifying an object and key information having a matching relationship from the key information database and the object database by using a recognition model, to obtain multiple sets of matching pairs.

That is, related information of any one object and any one piece of key information may be input into the recognition model, and the recognition model can recognize whether there is a matching relationship between the two.

The recognition model may be implemented by a neural network model, etc., and may be obtained by training using a supervised training manner, or may be obtained by training using a self-supervised training manner of contrastive learning. When training is performed using the contrastive learning manner, a training manner of the recognition model may be the same as that of the matching model; the matching model may serve as a common network architecture to extract corresponding features of key information and objects respectively, and the recognition model may be used to calculate a matching degree between key information and objects.

In some embodiments, the method may further comprise:
performing page configuration according to association conversion results respectively corresponding to at least one page link relationship, to update an internal link structure of a website.

The association conversion result corresponding to the page link relationship of a list page linking to a detail page may include L₁2q₂2i, that is, a first list page L₁ pointed to by first key information, a first detail page corresponding to an object i matched by second key information, and the second key information q₂ as an internal link in the first list page.

The association conversion result corresponding to the page link relationship of a detail page linking to a list page may include it2qt2Lt, that is, a detail page of a target object it, a target list page Lt pointed to by target key information qt, and the target key information qt as an internal link in the detail page.

The association conversion result corresponding to the page link relationship of a detail page linking to a detail page may include i₁2q₂2i₂, that is, a first detail page of a first object i₁, a second detail page of a second object i₂, and second key information q₂ matching the second object i₂ as an internal link in the first detail page.

The association conversion result corresponding to the page link relationship of a list page linking to a list page may include: L₁2q₂2L₂, that is, a first list page pointed to by first key information, a second list page pointed to by second key information, and the second key information as an internal link in the first list page.

Page configuration may be performed according to the above association conversion results, thereby updating the internal link structure of the website.

In some embodiments, the method may further comprise:
sending association conversion results respectively corresponding to at least one page link relationship to target personnel; where the association conversion results are used to generate page configuration information, and the page configuration information is used to update the internal link structure of the website.

That is, the target personnel may perform page configuration according to the association conversion results to obtain page configuration information, and the page configuration information may be configured in the website, so that the website updates the internal link structure.

In some embodiments, identifying objects and key information having a matching relationship from a key information database and an object database to obtain multiple sets of matching pairs includes:
identifying an object and key information having a matching relationship from the key information database and the object database in response to a page update instruction, to obtain multiple sets of matching pairs.

As an optional manner, the page update instruction may be generated periodically, thereby implementing periodic updates to the internal link structure.

In addition, as another optional manner, a click-through rate corresponding to the website may be statistically analyzed, and the page update instruction may be generated based on the click-through rate satisfying a first update condition.

The click-through rate may represent an internal link optimization result to a certain extent; if the click-through rate increases, it indicates that the internal link optimization is effective, etc., and the first update condition may refer to, for example, the click-through rate being lower than a click threshold, etc.

The click-through rate may be calculated and obtained based on the number of clicks within a statistical time period, etc.

In addition, as yet another optional manner, a crawl rate and/or an indexing rate corresponding to the website may be statistically analyzed, and the page update instruction may be generated based on the crawl rate and/or the indexing rate satisfying a second update condition.

The crawl rate and/or indexing rate corresponding to the website represent the internal link optimization result to a certain extent. The second update condition may be, for example, the crawl rate being lower than a crawl threshold and/or the indexing rate being lower than an indexing threshold, etc.

The crawl rate may be calculated and obtained based on the number of crawls within a statistical time period, etc., and the indexing rate may be calculated and obtained based on the number of inclusions within a statistical time period, etc.

FIG. 3 is a flowchart of an embodiment of a data processing method provided by an embodiment of the present application. This embodiment introduces the technical solution of the embodiment of the present application from the perspective of model training. The technical solution of this embodiment may be executed by a server, and the method may include the following steps:
301: Obtain multiple sets of sample matching pairs.

The sample matching pair may include sample key information and a sample object.

It may be from historical record data, where the sample key information may refer to historical search information, and the sample object may refer to an object corresponding to a detail page pointed to by a click action performed in search results corresponding to the historical search information.

302: Input the multiple sets of sample matching pairs into a matching model as training data of a current training batch.

Model training is performed in batches, and each training batch corresponds to multiple sets of sample matching objects.

303: Train the matching model by adopting a contrastive learning manner, using any one sample matching pair as a positive sample, and using the sample key information in any one sample matching pair and the sample object in at least one other sample matching pair as a negative sample.

For example, assuming a first sample matching pair is a positive sample, sample key information in the first sample matching pair may form a negative sample with a sample object in other sample matching pairs other than the first sample matching pair. Positive samples and negative samples may be constructed during the matching model training process, thereby implementing training.

The matching model is used to identify objects and key information having a matching relationship in the key information database and the object database, to obtain multiple sets of matching pairs; the multiple sets of matching objects are used to perform association conversion, to obtain any two pages respectively corresponding to at least one page link relationship and key information used as an internal link between the two pages.

The matching model may be used to calculate a matching degree between an object and key information, thereby determining whether a matching relationship exists between the object and the key information according to the matching degree.

In addition, as another optional manner, the matching model may be specifically used to extract key information features respectively corresponding to multiple pieces of key information in the key information database, and for multiple objects in the object database, use the matching model to respectively extract respective object features from related information of the multiple objects; where the key information features and the object features are used to determine objects and key information having a matching relationship in the key information database and the object database, to obtain multiple sets of matching pairs.

In some embodiments, the training the matching model by adopting a contrastive learning manner, using any one sample matching pair as a positive sample, and using sample key information in any one sample matching pair and a sample object in at least one other sample matching pair as negative samples may comprise:
extracting sample key information features corresponding to sample key information and sample object features corresponding to sample objects in the multiple sets of sample matching pairs respectively by using the matching model;
using any one sample matching pair as a positive sample, and using sample key information in any one sample matching pair and a sample object in at least one other sample matching pair as negative samples;
calculating a matching degree corresponding to the positive sample and a matching degree corresponding to the negative sample based on the sample information features and the sample object features.

The matching model is trained with a training objective of maximizing the matching degree corresponding to the positive sample and minimizing the matching degree corresponding to the negative sample.

Taking maximizing the matching degree corresponding to the positive sample and minimizing the matching degree corresponding to the negative sample as the training objective may be implemented using a loss function, etc.

In an actual application, the embodiment of the present application may be applied to an e-commerce website scenario. The e-commerce website may provide commodities for users to purchase. The commodity website mainly includes list pages and commodity detail pages. The commodity detail page is used to introduce commodity-related information, etc., so as to facilitate the user to understand the commodity, and may provide some commodity processing controls, such as add to cart, purchase, favorite, etc., for the user to trigger corresponding operations. The list page may refer to, for example, a commodity aggregation page, carrying commodity prompt information linking to different commodity detail pages, etc. In the embodiment of the present application, a keyword pointing to a commodity detail page may serve as the commodity prompt information in the list page, and of course, may also serve as a hyperlink other than the commodity prompt information, etc.

During an information interaction process between a client and a server, the list page and the detail page are sent from the server to the client and displayed to the user by the client, and the user may operate an internal link in the list page and the detail page to jump to another page.

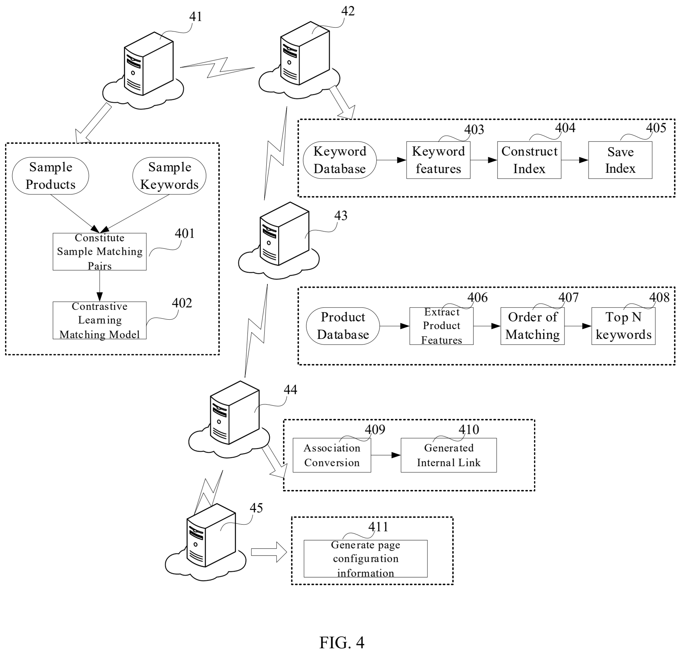

The technical solution of the present application is described below taking an e-commerce website scenario as an example; keywords can specifically refer to keywords; referring to the interaction schematic diagram shown in FIG. 4, the technical solution of the embodiment of the present application can be executed by a server end, and the server end can be composed of a distributed server cluster, adopting an elastic scheduling manner, where in a case of an execution failure of any server end, an execution task can be transferred to another server to continue execution.

As shown in FIG. 4, a model training operation can be executed by a first server 41: sample products and sample keywords having a matching relationship with the sample products can constitute sample matching pairs 401; each sample matching pair is input into a matching model as a positive sample, the matching model can construct negative samples, and a matching model 402 is obtained by training according to the positive samples and the negative samples using a contrastive learning manner.

Keyword features 403 respectively corresponding to multiple keywords in a keyword database can be extracted by a second server 42 using the matching model obtained by training; afterwards, the multiple keywords in the keyword database can be clustered according to the keyword features to obtain multiple information groups, and group features respectively corresponding to the multiple information groups can be respectively generated based on keyword features of at least one keyword respectively included in the multiple information groups, and the group features of the multiple information groups are used as respective index identifiers 404, where the index identifier corresponding to each information group can be saved 405, for example, can be saved to a network storage system, etc.

Afterwards, respective product features 406 can be extracted from relevant information of multiple products by a third server 43 using the matching model for the multiple products in a product database; according to the product features, any product in the product database can be respectively matched with the index identifiers of the multiple information groups to determine at least one matched target information group, and then the product is respectively matched with each keyword in the at least one target information group, and sorting can be performed in an order of matching degrees from high to low 407, and Top N keywords 408 matching the object are selected, where N is an integer greater than or equal to 1. The Top N keywords can be uploaded to a fourth server 44. The fourth server 44 can be implemented using, for example, ODPS (Open Data Processing Service), etc.

The fourth server 44 can associate and convert multiple sets of matching pairs composed of products and keywords based on a correspondence between keywords and list pages 409, thereby obtaining two pages involved in different page link relationships and keywords used as internal links between the two pages 410.

The fourth server 44 can send association conversion results respectively corresponding to different page link relationships to a configuration node 45, and target personnel can execute configuration operations in the configuration node 45, thereby generating page configuration information 411, and the page configuration information can be used to update an internal link structure of the e-commerce website.

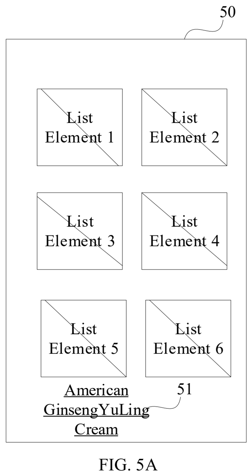

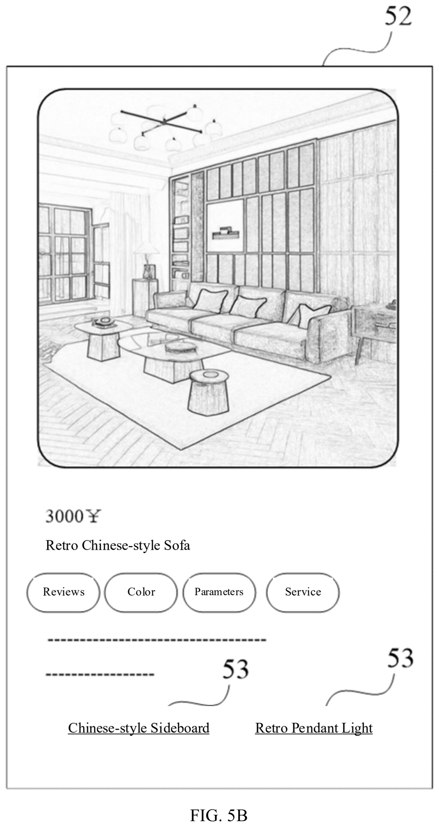

FIG. 5a shows a display schematic diagram of an internal link 51 placed in a list page 50, where the internal link 51 can point to another list page or a product detail page, etc.; FIG. 5b shows a display schematic diagram of an internal link 53 placed in a product detail page 52, where the internal link 53 can point to a list page or another product detail page.

In the embodiment of the present application, four types of page link relationships involved in the e-commerce website may be attributed to matching between commodities and keywords, so that only the problem of matching between commodities and keywords needs to be solved, and pages corresponding to the four types of page link relationships and keywords used as internal links between the pages may be obtained through association conversion. Generating internal links according to the matching relationship between objects and keywords ensures the relevance between pages corresponding to different page link relationships, helps to improve website weight and website indexing rate, and thus improves the rationality of the generated internal links. Moreover, the matching model may complete model training, billion-level index construction, and model prediction of a billion-level commodity database by adopting a contrastive learning manner; the overall process runs and completes in half a day, and on the basis of satisfying relevance requirements, the overall internal link island rate decreases significantly.

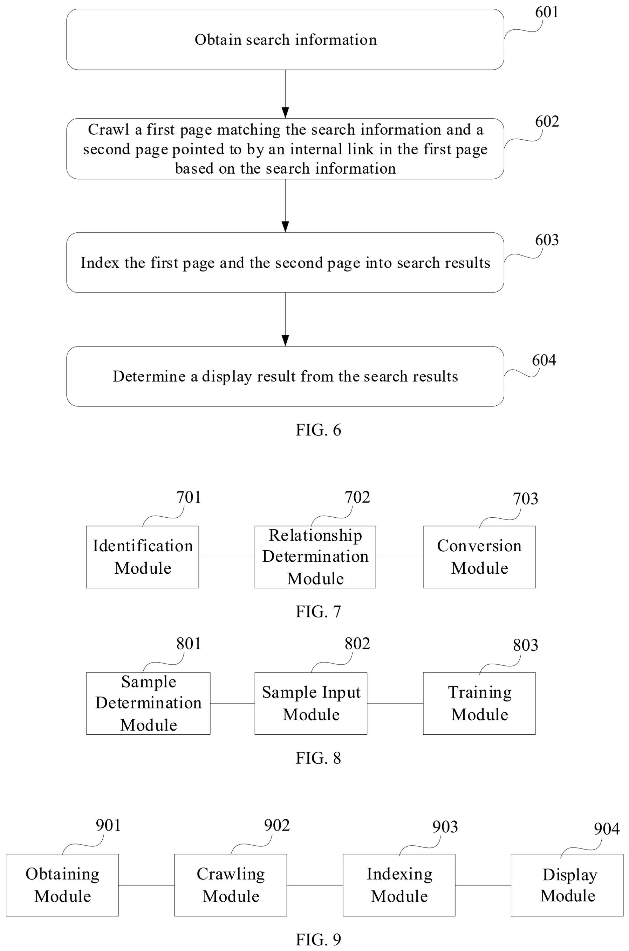

In addition, as shown in FIG. 6, the embodiment of the present application further provides a search method, this embodiment can be executed by a search engine, and the method can include the following steps:
601: Obtain search information,
where in practical applications, the search information can refer to a search term input by a user.
602: Crawl a first page matching the search information and a second page pointed to by an internal link in the first page based on the search information,
where the first page and the second page are list pages or detail pages; where the internal link is determined by associating and converting multiple sets of matching pairs according to at least one page link relationship; the matching pair is composed of an object and key information having a matching relationship with the object; a specific generation manner of the internal link can be referred to the description in the embodiment shown in FIG. 1, and is not repeated here.

In a case where an internal link is placed in the first page, the second page pointed to by the internal link will also be crawled by the search engine.

603: Index the first page and the second page into search results.

604: Determine a display result from the search results.

In particular, the crawled first page and second page can be indexed into the search results.

In particular, the search results include multiple pages crawled from different websites, and the multiple pages include the first page and the second page from a same website.

In particular, in determining the display result from the search results, the search engine can first sort the search results, that is, sort the first page and the second page in the search results; the search engine can first calculate a page weight of each page, and can sort the search results according to the page weights; since calculation of the page weight is related to relevance between pages, the more accurate the internal link placed in the first page is, the higher a page weight score of the first page will be, and therefore, a sorting priority in a sorting process will be higher, so a probability of the page being exposed can be improved, achieving SEO.

After the search engine sorts the search results, the display result can be determined according to a sorting result, and the display result can be sent to a user terminal, and the display result is displayed by the user terminal, where the display result includes page prompt information of one or more pages selected according to sorting priorities.

FIG. 7 is a structural schematic diagram of an embodiment of an internal link generating device provided by an embodiment of the present application. The device may include:
an identification module 701, configured to identify objects and key information having a matching relationship from a key information database and an object database, to obtain multiple sets of matching pairs;
a relationship determination module 702, configured to determine at least one page link relationship corresponding to a list page and a detail page;
a conversion module 703, configured to perform association conversion on the multiple sets of matching pairs according to the at least one page link relationship, to obtain two pages respectively corresponding to the at least one page link relationship and key information used as an internal link between the two pages.

In some embodiments, the identification module is specifically configured to cluster multiple pieces of key information in the key information database according to key information features to obtain multiple information groups; match any one object in the object database with the multiple information groups respectively according to object features to determine at least one matched target information group; and match the object with key information in the at least one target information group respectively to determine at least one piece of key information matching the object, where the object and the at least one piece of key information form at least one matching pair.

In some embodiments, it further includes:
a feature extraction module, configured to use a matching model to extract key information features respectively corresponding to multiple pieces of key information in the key information database; where the matching model is obtained by training based on multiple sets of sample matching pairs adopting a contrastive learning manner; and the sample matching pair includes sample key information and a sample object.

In some embodiments, the device may further include:
a model training module, configured to determine multiple sets of sample matching pairs corresponding to a current training batch; input the multiple sets of sample matching pairs into the matching model; and train the matching model by adopting a contrastive learning manner, using any one sample matching pair as a positive sample, and using sample key information in any one sample matching pair and a sample object in at least one other sample matching pair as a negative sample.

In some embodiments, the model training module training the matching model by adopting a contrastive learning manner, using any one sample matching pair as a positive sample, and using sample key information in any one sample matching pair and a sample object in at least one other sample matching pair as a negative sample includes: using the matching model to respectively extract sample key information features corresponding to sample key information and sample object features corresponding to sample objects in the multiple sets of sample matching pairs; using any one sample matching pair as a positive sample, and using sample key information in any one sample matching pair and a sample object in at least one other sample matching pair as a negative sample; calculating a matching degree corresponding to the positive sample and a matching degree corresponding to the negative sample based on the sample information features and the sample object features; and training the matching model with a training objective of maximizing the matching degree corresponding to the positive sample and minimizing the matching degree corresponding to the negative sample.

In some embodiments, the device may further include:
an index establishment module, configured to respectively generate group features respectively corresponding to the multiple information groups based on key information features of at least one piece of key information respectively included in the multiple information groups; and use the group features of the multiple information groups as respective index identifiers;
the identification module matching any one object in the object database with the multiple information groups respectively according to the object features to determine the matched target information group includes: selecting a target index identifier matching any one object according to the object features; and determining a target information group corresponding to the target index identifier.

In some embodiments, the at least one page link relationship includes a list page linking to a detail page;
the conversion module is specifically configured to determine multiple pieces of key information having a matching relationship with a same object from multiple sets of matching pairs having same object characteristics; determine first key information and second key information according to matching degrees of the multiple pieces of key information with the object respectively; and determine a first list page pointed to by the first key information, a first detail page of the object, and use the second key information as an internal link in the first list page, based on a correspondence between key information and list pages.

In some embodiments, the conversion module determining the first key information and the second key information according to the matching degrees of the multiple pieces of key information with the object respectively includes: determining first key information whose matching degree satisfies a first matching requirement and determining second key information whose matching degree satisfies a second matching requirement according to the matching degrees of the multiple pieces of key information with the object respectively.

In some embodiments, the conversion module determining the second key information whose matching degree satisfies the second matching requirement includes: in a case where at least two pieces of key information exist in the multiple pieces of key information other than the first key information, selecting key information with a highest matching degree as the second key information.

In some embodiments, the at least one page link relationship includes a detail page linking to a list page;
the conversion module is specifically configured to search for a target matching pair from the multiple sets of matching pairs according to a matching degree between key information and an object; and determine a target list page pointed to by target key information in the target matching pair, a target detail page of a target object, and use the target key information as an internal link in the target detail page, based on a correspondence between key information and list pages.

In some embodiments, the conversion module searching for the target matching pair from the multiple sets of matching pairs according to the matching degree between key information and the object includes: determining multiple pieces of key information having a matching relationship with any one object from the multiple sets of matching pairs; and determining that key information corresponding to a highest matching degree forms the target matching pair with the object according to matching degrees of the multiple pieces of key information with the object respectively.

In some embodiments, the at least one page link relationship includes a detail page linking to a detail page;
the conversion module is specifically configured to determine a first object and a second object satisfying a relevance requirement; search for first key information matching the first object from the multiple sets of matching pairs; and determine a first detail page of the first object and a second detail page of the second object, and use the first key information as an internal link in the second detail page.

In some embodiments, the at least one page link relationship includes a list page linking to a list page;
the conversion module is specifically configured to search for first key information and second key information having a matching relationship with a same object according to multiple sets of matching pairs having same object characteristics; and determine a first list page pointed to by the first key information, a second list page pointed to by the second key information, and use the first key information as an internal link in the second list page, based on a correspondence between key information and list pages.

In some embodiments, the conversion module searching for the first key information and the second key information having a matching relationship with the same object according to the multiple sets of matching pairs having same object characteristics includes: searching for multiple pieces of key information having a matching relationship with the same object from the multiple sets of matching pairs having same object characteristics; and determining first key information whose matching degree satisfies a third matching requirement and determining second key information whose matching degree satisfies a fourth matching requirement according to matching degrees of the multiple pieces of key information with the object respectively.

In some embodiments, the conversion module determining the second key information whose matching degree satisfies the fourth matching requirement includes: in a case where at least two pieces of key information exist in the multiple pieces of key information other than the first key information, selecting key information with a highest matching degree as the second key information.

In some embodiments, the device may further include:
a page configuration module, configured to perform page configuration according to association conversion results respectively corresponding to the at least one page link relationship, to update an internal link structure of a website; or, send the association conversion results respectively corresponding to the at least one page link relationship to target personnel; where the association conversion results are used to generate page configuration information, and the page configuration information is used to update the internal link structure of the website.

In some embodiments, the device may further include:
an information database construction module, configured to determine key information in search records and a list page pointed to by the key information according to the search records generated inside a website and/or outside the website; establish a correspondence between the key information and the list page, and construct a key information database according to the key information.

In some embodiments, the information database construction module determining the key information in the search records and the list page pointed to by the key information includes: determining the key information in the search records and at least one candidate list page pointed to by the key information; and determining a list page corresponding to the key information according to click information of the at least one candidate list page.

In some embodiments, the identification module is specifically configured to identify objects and key information having a matching relationship from the key information database and the object database in response to a page update instruction, to obtain multiple sets of matching pairs.

In some embodiments, the device may further include:
an instruction generation module, configured to statistically analyze a click-through rate corresponding to the website, and generate the page update instruction according to the click-through rate satisfying a first update condition; or, statistically analyze a crawl rate and/or an indexing rate corresponding to the website, and generate the page update instruction according to the crawl rate and/or the indexing rate satisfying a second update condition.

The internal link generating device described in FIG. 7 may execute the internal link generating method described in the embodiment shown in FIG. 1, and its implementation principles and technical effects will not be repeated here. Specific manners in which each module and unit in the internal link generating device in the above embodiments perform operations have been described in detail in the embodiments related to the method, and will not be described in detail here.

FIG. 8 is a structural schematic diagram of an embodiment of a data processing device provided by an embodiment of the present application. The device may include:
a sample determination module 801, configured to obtain multiple sets of sample matching pairs;
a sample input module 802, configured to input the multiple sets of sample matching pairs into a matching model as training data of a current training batch;
a training module 803, configured to train the matching model by adopting a contrastive learning manner, using any one sample matching pair as a positive sample, and using sample key information in any one sample matching pair and a sample object in at least one other sample matching pair as a negative sample;
where the matching model is used to identify an object and key information having a matching relationship in a key information database and an object database, to obtain multiple sets of matching pairs; and the multiple sets of matching pairs are used to perform association conversion to obtain any two pages respectively corresponding to at least one page link relationship and key information used as an internal link between the two pages.

In some embodiments, the matching model is specifically used to extract key information features respectively corresponding to multiple pieces of key information in the key information database, and for multiple objects in the object database, use the matching model to respectively extract respective object features from related information of the multiple objects; where the key information features and the object features are used to determine objects and key information having a matching relationship in the key information database and the object database, to obtain multiple sets of matching pairs.

In some embodiments, the training module training the matching model by adopting a contrastive learning manner, using any one sample matching pair as a positive sample, and using sample key information in any one sample matching pair and a sample object in at least one other sample matching pair as a negative sample includes: using the matching model to respectively extract sample key information features corresponding to sample key information and sample object features corresponding to sample objects in the multiple sets of sample matching pairs; using any one sample matching pair as a positive sample, and using sample key information in any one sample matching pair and a sample object in at least one other sample matching pair as a negative sample; calculating a matching degree corresponding to the positive sample and a matching degree corresponding to the negative sample based on the sample information features and the sample object features; and training the matching model with a training objective of maximizing the matching degree corresponding to the positive sample and minimizing the matching degree corresponding to the negative sample.

The data processing device described in FIG. 8 may execute the data processing method described in the embodiment shown in FIG. 3, and its implementation principles and technical effects will not be repeated here. Specific manners in which each module and unit in the internal link generating device in the above embodiments perform operations have been described in detail in the embodiments related to the method, and will not be described in detail here.

FIG. 9 is a structural schematic diagram of an embodiment of a search apparatus provided by an embodiment of the present application, and the apparatus can include:
an obtaining module 901, configured to obtain search information;
a crawling module 902, configured to crawl a first page matching the search information and a second page pointed to by an internal link in the first page based on the search information; where the first page and the second page are list pages or detail pages; where the internal link is determined by associating and converting multiple sets of matching pairs according to at least one page link relationship; and the matching pair is composed of an object and key information having a matching relationship with the object;
an indexing module 903, configured to index the first page and the second page into search results.
a display module 904, configured to determine a display result from the search results.

The search device described in FIG. 9 may execute the search method described in the embodiment shown in FIG. 6, and its implementation principles and technical effects will not be repeated here. Specific manners in which each module and unit in the internal link generating device in the above embodiments perform operations have been described in detail in the embodiments related to the method, and will not be described in detail here.

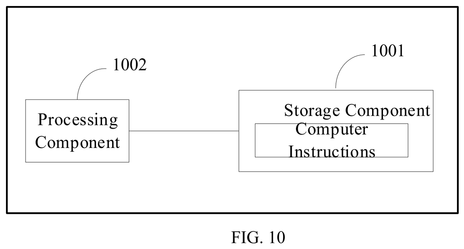

An embodiment of the present application further provides a computing device, as shown in FIG. 10, the computing device may include a storage component 1001 and a processing component 1002.

A storage component 1001 stores one or more computer instructions, where the one or more computer instructions are called and executed by a processing component to implement the internal link generation method shown in FIG. 1 or the data processing method shown in FIG. 3 or the search method shown in FIG. 6.

Of course, the computing device can certainly further include other components, such as an input/output interface, a display component, a communication component, etc.

The input/output interface provides an interface between the processing component and a peripheral interface module, and the peripheral interface module can be an output device, an input device, etc. The communication component is configured to facilitate wired or wireless communication between the computing device and other devices, etc.

Here, the processing component can include one or more processors to execute computer instructions to complete all or some steps in the above methods. Of course, the processing component can also be implemented as one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components, for executing the above methods.

The storage component is configured to store various types of data to support operations at the terminal. The storage component can be implemented by any type of volatile or non-volatile storage device or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic disk, or an optical disk.

It should be noted that the above computing device can be a physical device or an elastic computing host provided by a cloud computing platform, etc. It can be implemented as a distributed cluster composed of multiple servers or terminal devices, or can be implemented as a single server or a single terminal device.

An embodiment of the present application further provides a computer-readable storage medium storing a computer program, where when the computer program is executed by a computer, the internal link generation method of the embodiment shown in the above FIG. 1 or the data processing method of the embodiment shown in the above FIG. 3 or the search method shown in FIG. 6 can be implemented. The computer-readable medium can be included in the electronic device described in the above embodiments; or can exist alone without being assembled into the electronic device.

An embodiment of the present application further provides a computer program product, including a computer program carried on a computer-readable storage medium, where when the computer program is executed by a computer, the internal link generation method of the embodiment shown in the above FIG. 1 or the data processing method of the embodiment shown in the above FIG. 3 or the search method shown in FIG. 6 can be implemented. In such an embodiment, the computer program can be downloaded and installed from a network, and/or installed from a removable medium. When the computer program is executed by a processor, various functions defined in the system of the present application are executed.

It should be noted that the embodiments of the present application may involve the use of user data; in actual application, user-specific personal data may be used in the solutions described herein within a scope permitted by applicable laws and regulations in compliance with requirements of applicable laws and regulations of a country where the user is located (for example, explicit consent of the user, effective notification to the user, etc.).

Those skilled in the art can clearly understand that for convenience and conciseness of description, for specific working processes of the above-described systems, devices, and units, reference may be made to corresponding processes in the foregoing method embodiments, which will not be repeated here.

The device embodiments described above are merely schematic. The units described as separate parts may or may not be physically separate, and parts displayed as units may or may not be physical units, that is, they may be located in one place or distributed on multiple network units. Some or all of the modules may be selected according to actual needs to achieve the objectives of the solutions of the embodiments. A person of ordinary skill in the art can understand and implement them without creative efforts.

Through the description of the above implementations, those skilled in the art can clearly understand that each implementation may be implemented by means of software plus a necessary general hardware platform, and of course, may also be implemented by hardware. Based on such understanding, the above technical solutions essentially, or the part contributing to the prior art, may be embodied in the form of a software product. The computer software product may be stored in a computer-readable storage medium, such as a ROM/RAM, a magnetic disk, an optical disc, etc., and includes several instructions for causing a computer device (which may be a personal computer, a server, or a network device, etc.) to execute the methods described in various embodiments or some parts of the embodiments.

Finally, it should be noted that the above embodiments are only used to explain the technical solutions of the present application, but not to limit them; although the present application has been described in detail with reference to the foregoing embodiments, those of ordinary skill in the art should understand that they can still modify the technical solutions recorded in the foregoing embodiments, or make equivalent replacements to some technical features thereof; and these modifications or replacements do not make the essence of the corresponding technical solutions depart from the spirit and scope of the technical solutions of the embodiments of the present application.

## Claims

1. An internal link generating method, **characterized in that** it comprises:
determining multiple sets of matching pairs; wherein each of the matching pairs is composed of an object and key information having a matching relationship with the object; and each of the matching pairs is identified and obtained from a key information database and an object database;
determining at least one page link relationship corresponding to a list page or a detail page;
performing association conversion on the multiple sets of matching pairs according to the at least one page link relationship, to obtain two pages respectively corresponding to the at least one page link relationship and key information used as an internal link between the two pages.

2. The method of claim 1, further comprising:
clustering multiple pieces of key information in the key information database according to key information features, to obtain multiple information groups;
matching objects in the object database respectively with the multiple information groups according to object features, to determine at least one matched target information group;
matching the object respectively with key information in the at least one target information group to determine at least one piece of key information matching the object, and forming at least one matching pair from the object and the at least one piece of key information.

3. The method of claim 2, further comprising:
extracting key information features respectively corresponding to multiple pieces of key information in the key information database by using a matching model;
extracting object features respectively corresponding to multiple objects in the object database by using the matching model;
wherein the matching model is obtained by training based on multiple sets of sample matching pairs using a contrastive learning manner; and the sample matching pair comprises sample key information and a sample object.

4. The method of claim 1, wherein the at least one page link relationship comprises a list page linking to a detail page;
the performing association conversion on the multiple sets of matching pairs according to the at least one page link relationship to obtain two pages respectively corresponding to the at least one page link relationship and key information used as an internal link between the two pages comprises:
determining, from the multiple sets of matching pairs, multiple pieces of key information having a matching relationship with a same object;
determining first key information and second key information according to matching degrees of the multiple pieces of key information with the object respectively;
determining a first list page pointed to by the first key information and a first detail page of the object based on a correspondence relationship between key information and list pages, and using the second key information as an internal link in the first list page.

5. The method of claim 4, wherein the determining first key information and second key information according to matching degrees of the multiple pieces of key information with the object respectively comprises:
determining first key information whose matching degree satisfies a first matching requirement and determining second key information whose matching degree satisfies a second matching requirement according to the matching degrees of the multiple pieces of key information with the object respectively.

6. The method of claim 1, wherein the at least one page link relationship comprises a detail page linking to a list page;
the performing association conversion on the multiple sets of matching pairs according to the at least one page link relationship to obtain two pages respectively corresponding to the at least one page link relationship and key information used as an internal link between the two pages comprises:
searching for a target matching pair from the multiple sets of matching pairs according to a matching degree between key information and an object;
determining a target list page pointed to by target key information in the target matching pair and a target detail page of a target object based on a correspondence relationship between key information and list pages, and using the target key information as an internal link in the target detail page.

7. The method of claim 1, wherein the at least one page link relationship comprises a detail page linking to a detail page;
the performing association conversion on the multiple sets of matching pairs according to the at least one page link relationship to obtain two pages respectively corresponding to the at least one page link relationship and key information used as an internal link between the two pages comprises:
determining a first object and a second object satisfying a relevance requirement;
searching for first key information matching the first object from the multiple sets of matching pairs;
determining a first detail page of the first object and a second detail page of the second object, and using the first key information as an internal link in the second detail page.

8. The method of claim 1, wherein the at least one page link relationship comprises a list page linking to a list page;
the performing association conversion on the multiple sets of matching pairs according to the at least one page link relationship to obtain two pages respectively corresponding to the at least one page link relationship and key information used as an internal link between the two pages comprises:
searching for first key information and second key information having a matching relationship with a same object from the multiple sets of matching pairs;
determining a first list page pointed to by the first key information and a second list page pointed to by the second key information based on a correspondence relationship between key information and list pages, and using the first key information as an internal link in the second list page.

9. The method of claim 8, wherein the searching for first key information and second key information having a matching relationship with a same object from the multiple sets of matching pairs comprises:
searching for multiple pieces of key information having a matching relationship with a same object from the multiple sets of matching pairs;
determining first key information whose matching degree satisfies a third matching requirement and determining second key information whose matching degree satisfies a fourth matching requirement according to matching degrees of the multiple pieces of key information with the object respectively.

10. The method of claim 1, further comprising:
performing page configuration according to association conversion results respectively corresponding to the at least one page link relationship, to update an internal link structure of a website;
or, sending an association conversion result respectively corresponding to the at least one page link relationship to a target person; wherein the association conversion result is used to generate page configuration information, and the page configuration information is used to update an internal link structure of the website.

11. The method of claim 1, further comprising:
determining key information in search records and a list page pointed to by the key information according to the search records generated inside a website and/or outside the website;
establishing a correspondence relationship between the key information and the list page, and constructing a key information database according to the key information.

12. A data processing method, comprising:
obtaining multiple sets of sample matching pairs;
inputting the multiple sets of sample matching pairs as training data of a current training batch into a matching model;
training the matching model by adopting a contrastive learning manner, using any one of the sample matching pairs as a positive sample, and using sample key information in any one of the sample matching pairs and a sample object in at least one other of the sample matching pairs as negative samples;
wherein the matching model is used to identify an object and key information having a matching relationship in a key information database and an object database, to obtain multiple sets of matching pairs; and the multiple sets of matching pairs are used to perform association conversion to obtain any two pages respectively corresponding to at least one page link relationship and key information used as an internal link between the two pages.

13. A search method, comprising:
obtaining search information;
crawling a first page matching the search information and a second page pointed to by an internal link in the first page based on the search information; wherein the first page and the second page are list pages or detail pages; wherein the internal link is determined by performing association conversion on multiple sets of matching pairs according to at least one page link relationship; and the matching pair is composed of an object and key information having a matching relationship with the object;
indexing the first page and the second page into search results;
determining a display result from the search results.

14. A computing device, comprising a processing component and a storage component; the storage component stores one or more computer instructions; the one or more computer instructions are used to be called and executed by the processing component to implement the internal link generation method of any one of claims 1 to 11 or the data processing method of claim 12 or the search method of claim 13.

15. A computer-readable storage medium, storing a computer program, where the computer program, when executed by a computer, implements the internal link generation method of any one of claims 1 to 11 or the data processing method of claim 12 or the search method of claim 13.
